# EUROPEAN PATENT APPLICATION

(11) **EP 4 843 366 A1**
(43) Date of publication of application: **25.11.2026**
(21) Application number: 25177848.6
(22) Date of filing: 21.05.2025
(51) Int. Cl.: A01B 23/02, A01B 35/22, A01B 15/06

(54) **GROUND ENGAGING TOOL FOR A WORKING MACHINE AND METHOD FOR ASSEMBLING SAME**

(71) Applicant: CNH Industrial Kutno sp. z o.o., 99-300 Kutno (PL)
(72) Inventor: Cichocki, Adam, 99-300 Kutno (PL)
(74) Representative: CNH Industrial IP Department

(57) **Abstract**

A ground engaging tool (8) according to the present invention comprises a shank assembly (16) and a tool member (22, 24) removably coupled to the shank assembly (16) by means of a tensioning pin (28) and a locking pin (30). In a first rotational position of the locking pin (30), an enlarged shaft end portion (32) of the tensioning pin (28) is removably received in the locking pin (30) and, in a second rotational position of the locking pin (30), the enlarged shaft end portion (32) is engaged by the locking pin (30).

## Description

The present invention relates to a ground engaging tool for a working machine, in particular for an agricultural tillage implement, such as a field cultivator, and to a method for assembling such a ground engaging tool.

Tillage implements are commonly used for preparing soil for planting by mechanical agitation, such as digging, steering, and overturning. Examples of tillage operations include plowing, disking, harrowing, sweeping, and cultivating soil with cultivator shanks. Some tillage implements may include two or more sections coupled together to perform multiple functions as they are pulled over a field by an agricultural vehicle, such as a tractor. For example, a field cultivator is capable of simultaneously tilling soil and leveling the tilled soil in preparation for planting. Field cultivators convert compacted soil into a level seedbed with a consistent depth for providing optimal conditions for planting of crop. Residual crop material, weeds, or other undesired plants disposed on top of the soil are destroyed and worked into the soil.

A typical field cultivator may generally include a frame towed by the agricultural vehicle and supported by a plurality of wheels, the frame carrying a number of ground engaging tillage tools and, optionally, rear auxiliary tools for finishing the soil, such as tooth harrows and rolling baskets. Each ground engaging tool may comprise a shank assembly and at least one tool member, such as a cultivator point and/or a cultivator wing share, carried by the shank assembly.

On the one hand, the shape and size of the at least one tool member defines a working depth and a degree to which the ground is loosened, and it is therefore desirable to be able to change the at least one tool member in order to adapt the working characteristics as desired and to operate the field cultivator in numerous field conditions, including various soil types and soil conditions. On the other hand, the at least one tool member is subject to significant wear and tear, and it may therefore be necessary to change the at least one tool member often, e.g. within only a few working days. At the same time, large loads are acting on the at least one tool member which thus has to be reliably secured to the shank assembly.

It is an object of the present invention to provide a ground engaging tool and a method for assembling a ground engaging tool, in particular for an agricultural tillage implement, which allow for an easy and quick exchange of the at least one tool member by the user and a the same time ensure that the tool member is reliably secured.

This object is solved by the subject matter of independent claims 1 and 15. Preferred embodiments are subject of the dependent claims.

According to the present invention, a ground engaging tool for a working machine, in particular for an agricultural tillage implement, comprises a shank assembly configured to mount the ground engaging tool to a frame of the working machine, and a tool member removably coupled to the shank assembly by means of a tensioning pin and a locking pin. The tensioning pin is at least partially received in a first component of the shank assembly and the tool member, and the locking pin is at least partially received in a second component of the shank assembly and the tool member different from the first component. In a first rotational position of the locking pin, an enlarged shaft end portion of the tensioning pin is removably received in the locking pin, and, in a second rotational position of the locking pin, the enlarged shaft end portion of the tensioning pin is engaged by the locking pin thereby locking the tensioning pin in place and coupling the tool member to the shank assembly.

In this way, the tool member can be easily secured on the shank assembly by rotating the locking pin from the first rotational position into the second rotational position. In order to replace the tool member, only the locking pin is to be turned back into the first rotational position allowing the tensioning pin to be removed thereby releasing the tool member. A replacement tool member can then be arranged on the shank assembly and, after inserting the tensioning pin, the locking pin can be rotated from the first rotational position into the second rotational position again. Hence, the tool member can be replaced by the user fairly easy and quick. No special tools or professional assistance may be required.

The shank assembly may comprise a shank, wherein the tool member is attached directly to the shank. Preferably, however, the shank assembly comprises a shank and a mounting arrangement coupled to the shank as described herein below. The mounting arrangement provides more flexibility with respect to the number, type, and size of tool members mounted to the shank assembly and, therefore, with respect to the range of operations that can be carried out by the ground engaging tool and tillage implement, respectively.

The tool member may, for example, comprise a cultivator point or cultivator wing share. In one embodiment, the ground engaging tool comprises a first tool member and a second tool member, wherein one of the first tool member and the second tool member is a cultivator point and the other one of the first tool member and second tool member is a cultivator wing share. In this case, at least one of the first and second tool members is removably coupled to the shank assembly by means of the tensioning pin and the locking pin. More preferably, both of the first and second tool members are coupled to the shank assembly by means of the tensioning pin and the locking pin at the same time. Of course, the present invention applies to other tool members than the cultivator point and wing share as well.

In general, the first component may be the shank assembly or the tool member and the second component may be the other one of the shank assembly and the tool member. Consequently, the tensioning pin may at least partially be received in the shank assembly or the tool member, and the locking pin may at least partially be received in the other one of the shank assembly and the tool member. In other words, in one embodiment, the tensioning pin may at least partially be received in the shank assembly and the locking pin may at least partially be received in the tool member, or, in another embodiment, the tensioning pin may at least partially be received in the tool member and the locking pin may at least partially be received in the shank assembly.

The locking pin may be rotatably received in the second component. For example, the locking pin comprises a substantially cylindrical shape, at least in a mounting section of the locking pin, and the second component comprises at least one receptacle having a circular cross section receiving the locking pin such that the locking pin is rotatably supported by the second component. Preferably, the locking pin is rotatable about its longitudinal axis.

A longitudinal axis of the tensioning pin preferably extends perpendicular to the longitudinal axis of the locking pin. More preferably, the longitudinal axis of the tensioning pin intersects the longitudinal axis of the locking pin. In this way, the enlarged shaft end portion can easily be inserted into the locking pin in a radial direction of the locking pin and be engaged by the locking pin by rotation of the same into the second rotational position.

In a preferred embodiment, the tensioning pin comprises a pin head, an engaging shaft portion and the enlarged shaft portion which has a larger cross section than the engaging shaft portion. The locking pin has a cavity, a first recess extending in a radial direction of the locking pin between an outer circumferential surface of the locking pin and the cavity, and a slot extending from the first recess in a circumferential direction of the locking pin. Extending from the first recess means that the slot intersects the first recess and has a depth extending from the outer circumferential surface of the locking pin to the cavity, such that a relative movement of the tensioning pin from the first recess into the slot is possible.

In the first rotational position of the locking pin, the first recess is preferably aligned with the tensioning pin allowing the enlarged shaft end portion of the tensioning pin to be inserted into or removed from the cavity through the first recess. That is, the longitudinal axis of the tensioning pin may coincide with a longitudinal axis of the first recess. In the second rotational position of the locking pin, the engaging shaft portion of the tensioning pin is preferably received within the slot of the locking pin and, therefore, the enlarged shaft end portion of the tensioning pin is received and locked within the cavity of the locking pin. According to this configuration, the enlarged shaft end portion of the tensioning pin can be easily inserted in and removed from the cavity of the locking pin in the first rotational position of the locking pin and is engaged by the locking pin in the second rotational position.

The first recess and the cavity of the locking pin are preferably sized to receive the enlarged shaft end portion of the tensioning pin to allow easy passage of the enlarged shaft end portion. That is, a diameter of the first recess may be larger than the cross section of the enlarged shaft end portion and the cavity defines an inner lumen larger than the enlarged shaft end portion.

The slot of the locking pin preferably has a width which is smaller than the cross section of the enlarged shaft end portion and larger than the cross section of the engaging shaft portion thereby preventing the enlarged shaft end portion of the tensioning pin from being removed from the locking pin in the second rotational position. Hence, in the second rotational position of the locking pin, the engaging shaft portion of the tensioning pin is received within the slot of the locking pin. Preferably, the width of the slot is defined in a longitudinal direction of the locking pin.

The tensioning pin may further comprise a main shaft portion having a cross section larger than the cross section of the engaging shaft portion and preferably of the enlarged shaft end portion. In this way, the tensioning pin can be inserted into and removed from the first and second components and be properly supported within the same without affecting the enlarged shaft end portion's function.

The tensioning pin may further comprise a securing shaft portion securing the tensioning pin against rotation within the first component. For example, the first component may have an opening receiving the securing shaft portion of the tensioning pin, wherein the opening and the securing shaft portion have corresponding cross-sections, such as rectangular cross sections, preventing the tensioning pin from being rotated. The securing shaft portion may be located adjacent to the pin head. The securing shaft portion may also be integrally formed with the pin head.

The pin head of the tensioning pin preferably rests against the first component thereby holding the first and second components together when the enlarged shaft end portion is engaged by the locking pin. The pin head may therefore have a diameter larger than the cross section of the engaging shaft portion and the enlarged shaft end portion. Of course, the pin head may also rest against other means, such as a washer or the like, arranged between the pin head and the first component. In this way, the pin head acts as a counter bearing, what is particularly beneficial when the tensioning pin is tightened towards the locking pin by rotation of the locking pin as described below.

A wall thickness of the locking pin is defined in the radial direction of the locking pin from the outer circumferential surface to an inner circumferential surface of the locking pin, wherein the inner circumferential surface is defined by the cavity. In a preferred embodiment, the wall thickness increases from the first recess along the slot, i.e., in a circumferential direction from the first recess of the locking pin towards an end of the slot. More precisely, the locking pin may comprise a first wall thickness in a first section of the locking pin, in which the engaging shaft portion of the tensioning pin is positioned when the locking pin is in the first rotational position, and the locking pin may comprise a second wall thickness in a second section of the locking pin, in which the engaging shaft portion of the tensioning pin is positioned when the locking pin is in the second rotational position, wherein the first wall thickness is smaller than the second wall thickness. In this way, the enlarged shaft end portion of the tensioning pin contacting the inner circumferential surface of the locking pin within the cavity and, thus, the entire tensioning pin is forced towards a center of the locking pin when rotating same from the first into the second rotational position. Consequently, the tensioning pin is not only engaged by the locking pin but also tightened towards same in order to securely connect the tool member and shank assembly. In particular, a connection free of play can be established in this way in a simple manner.

The enlarged shaft end portion of the tensioning pin may comprise a contact surface contacting the inner circumferential surface of the locking pin. Preferably, the contact surface is a curved or slanted surface to facilitate smooth rotation of the locking pin while the enlarged shaft end portion contacts the inner circumferential surface. Alternatively or in addition, the wall thickness may continuously increase to enable smooth rotation of the locking pin.

In a preferred embodiment, the cavity is formed by a second recess extending from an end surface of the locking pin in an axial direction of the locking pin. In order to realize a varying wall thickness of the locking pin, the second recess may be eccentric with respect to the longitudinal axis of the locking pin. Preferably, the second recess is a bore having an axis offset from the longitudinal axis of the locking pin.

By comprising a tool engagement portion configured to engage with a common handheld or power tool for rotating the locking pin between the first and second rotational positions, the locking pin is capable of being easily rotated by the user without the need for special equipment. The tool engagement portion may be provided on the outer circumferential surface, e.g., in the form of a hexagonal bolt head or the like, on the inner circumferential surface, e.g., in the form of a hexagonal recess or the like, or in an end face of the locking pin, such as in the form of a slotted screw head or cross recessed screw head.

A particularly preferred embodiment will now be described in greater detail. In this embodiment, the first component is the tool member comprising a cultivator point receiving the tensioning pin, and the second component is the shank assembly comprising a shank. The shank may comprise a receptacle for receiving the locking pin. Preferably, however, the shank assembly further comprises the mounting arrangement attached to the shank, the mounting arrangement comprising at least one first receptacle receiving the locking pin. Hence, the mounting arrangement of the shank assembly and the tool member may be adapted as needed but can still be easily mounted to a shank of a common tillage implement. In particular, the at least one first receptacle receiving the locking pin may not extend through the shank itself.

The tensioning pin preferably extends through the cultivator point and the shank, and the pin head of the tensioning pin rests against the cultivator point, e.g., in a counterbore or countersunk receiving the pin head.

In one embodiment, the mounting arrangement comprises a first mounting plate and a second mounting plate laterally attached to the shank, wherein each of the first and second mounting plates comprises a first receptacle receiving the locking pin. Besides acting as an adapter for mounting different types of tool members, providing the first and second mounting plates provides proper support of the locking pin on both sides of the shank. Laterally attached to the shank means that the first mounting plate and the second mounting plate are coupled to a first lateral surface and a second lateral surface of the shank facing in a lateral direction perpendicular to a direction of travel of the ground engaging tool. In addition, the first and second mounting plates may serve for mounting additional tool members as described below.

The tool member may also be referred to as a first tool member. In a preferred embodiment, the engaging tool further comprises a second tool member, which may be formed by a cultivator wing share. The cultivator wing share may have a mounting portion for mounting the cultivator wing share to the shank assembly, in particular to the mounting assembly.

The mounting portion of the cultivator wing share may comprise at least one second receptacle aligned with the at least one first receptacle of the mounting arrangement of the shank assembly for receiving the locking pin. Hence, the locking pin not only couples the cultivator point to the shank assembly via the tensioning pin but also couples the cultivator wing share to the shank assembly at the same time thereby realizing a very quick and easy to use coupling system.

Furthermore, each of the first and second mounting plates of the mounting arrangement of the shank assembly may comprise at least one protrusion and the mounting portion of the cultivator wing share may comprise at least two hook portions, each hook portion engaging with one protrusion of the first and second mounting plates, respectively, to hold the cultivator wing share in place. In this way, the cultivator wing share can easily be placed in a defined position with respect to the shank assembly before inserting the locking pin. The wing share remains in place and the user is allowed to use both hands for arranging the cultivator point, the tensioning pin, and the locking pin in their desired positions. The hook portions may be formed by hooks or respective grooves or slots formed in the mounting portion.

Preferably the mounting portion of the cultivator wing share comprises a first section and a second section, wherein the first section can be arranged adjacent to the first mounting plate and the second section can be arranged adjacent to the second mounting plate thereby receiving the shank assembly between the first and second sections of the mounting portion. Each of the first section and the second section may comprise at least one hook portion as well as one second receptacle for receiving the locking pin. Preferably, two protrusions and two hook portions are provided on either side of the shank to prevent rotation of the cultivator wing share once arranged on the shank assembly.

The present invention also relates to an agricultural tillage implement, in particular in the form of a field cultivator, the tillage implement comprising a frame and a plurality of ground engaging tools according to the present invention mounted to the frame. The plurality of ground engaging tools may be fixedly attached to the frame of the tillage implement. Preferably, however, the plurality of ground engaging tools is pivotally attached to the frame of the tillage implement and may be biased towards a working position by means of a spring assembly or the like. The tillage implement may be supported on the ground by a plurality of wheels. The tillage implement may further comprise auxiliary tools, such as tooth harrows and/or roller baskets arranged behind the plurality of ground engaging tools with respect to a direction of travel.

The present invention also relates to a tractor-implement-combination comprising a tractor and the agricultural tillage implement towed by the tractor.

The present invention furthermore relates to a method for assembling a ground engaging tool by mounting a tool member to a shank assembly, the method comprising the steps of:
arranging the tool member in position on the shank assembly;
inserting a locking pin into the shank assembly;
inserting a tensioning pin into the tool member such that the tensioning pin extends through the tool member and into the locking pin, wherein an enlarged shaft end portion of the tensioning pin is received in a cavity of the locking pin;
rotating the locking pin, thereby engaging the tensioning pin and locking the tensioning pin in place.

In this way, the tool member can be easily secured on the shank assembly by rotating the locking pin. In order to change the tool member, only the locking pin is to be turned back to release the tensioning pin and, thus, the tool member. A replacement tool member can then be arranged on the shank assembly and, after inserting the tensioning pin, the locking pin can be rotated again. Hence, the tool member can be exchanged by the user fairly easy and quick. No special tools or professional assistance may be required.

Preferably, the method may be utilized to assemble a ground engaging tool according to the present invention. Consequently, all features and advantages described herein with respect to the ground engaging tool apply to the method in an analogous manner and vice versa.

The tool member may be arranged on the shank assembly prior to or after inserting the locking pin. Preferably, the locking pin inserted into the shank assembly first and the tool member is then arranged on the shank assembly directly followed by inserting the tensioning pin.

The step of inserting the locking pin may further comprise arranging the locking pin in the first rotational position, and the step of rotating the locking pin may comprise rotating the locking pin from the first rotational position into the second rotational position.

The method may further comprise the steps of arranging a second tool member, preferably in the form of the cultivator wing share, in position on the shank assembly, wherein inserting the locking pin into the shank assembly also comprises inserting the locking pin into the second tool member. In particular, arranging the second tool member in position may comprise the steps of arranging the hook portions of the cultivator wing share mounting portions on corresponding protrusions of the mounting arrangement of the shaft assembly.

Preferred embodiments of the present invention will now be described referring to the accompanying drawings. It should be understood, however, that the invention is not limited to the precise arrangements, dimensions, and instruments shown. Like numerals indicate like elements throughout the drawings.
- Fig. 1: is a perspective view of an agricultural vehicle towing an exemplary agricultural tillage implement in the form of a field cultivator.
- Fig. 2: is a perspective view of an exemplary embodiment of a ground engaging tool according to the present invention.
- Fig. 3: is an exploded view of the ground engaging tool of fig. 2.
- Fig. 4: is a detailed side view of a tensioning pin of the ground engaging tool of figs. 2 and 3.
- Fig. 5a: is a detailed perspective view of a locking pin of the ground engaging tool of figs. 2 and 3.
- Fig. 5b: is a cross-sectional view of the locking pin of fig. 5a in a plane perpendicular to a longitudinal axis of the locking pin and along a centerline of a slot of the locking pin.
- Fig. 6: is a cross-sectional view of the ground engaging tool of figs. 2 and 3 showing an unlocked condition with the locking pin in a first rotational position.
- Fig. 7: is a cross-sectional view of the ground engaging tool of figs. 2 and 3 showing a locked condition with the locking pin in a second rotational position.

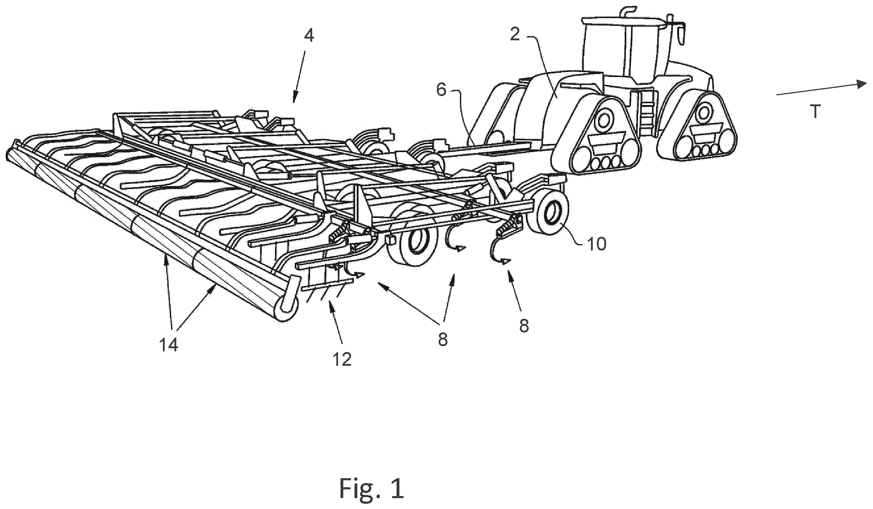

Referring now to fig. 1, an agricultural vehicle 2, such as a tractor or other work vehicle, and an agricultural implement 4 towed by the agricultural vehicle 2 in a direction of travel indicated by arrow T are shown in a perspective view. The agricultural implement 4 may be in the form of a field cultivator or other tillage implement. The agricultural implement 4 generally includes a frame 6 and a plurality of ground engaging tools 8 mounted on the frame 6 as known in the art. The frame 6 of the agricultural implement 4 may be supported on the ground by a plurality of wheels 10 and may be a single body frame or a multi-section frame which has wing sections capable of folding upwardly for road transportation.

Each ground engaging tool 8 is configured to engage the soil to perform a tilling operation by converting compacted soil and working residual crop material and the like into the soil. The agricultural implement 4 may further comprise auxiliary tools for finishing the soil, such as tooth harrows 12 and roller baskets 14 arranged behind the plurality of ground engaging tools 8 with respect to the direction of travel T.

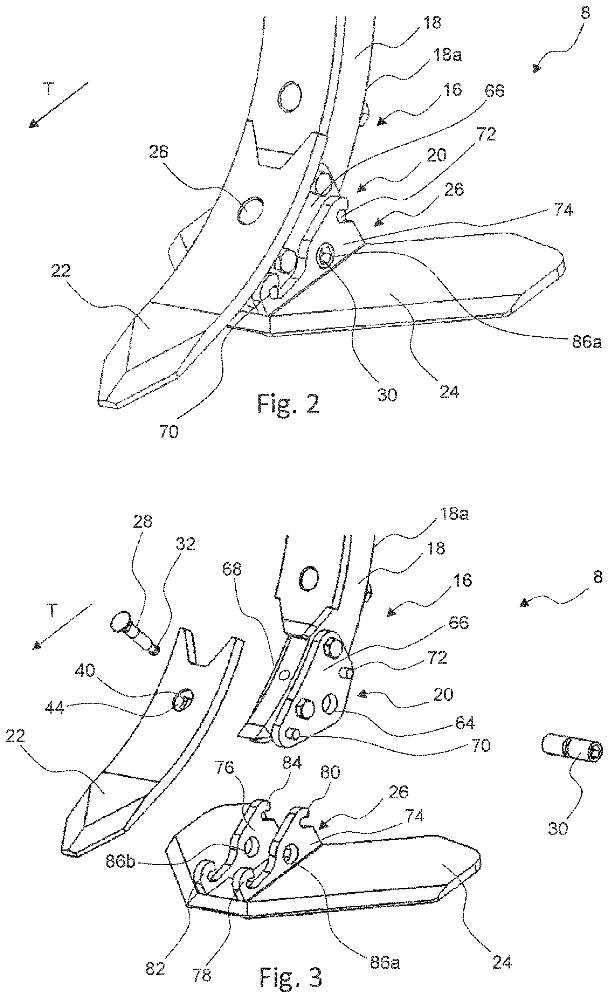

Referring to figs. 2 and 3, an exemplary embodiment of a ground engaging tool 8 according to the present invention is shown in a perspective view and in an exploded view, respectively. The ground engaging tool 8 comprises a shank assembly 16 configured to mount the ground engaging tool 8 to the frame 6, the shank assembly 16 preferably including a shank 18 and a mounting arrangement 20 coupled to the shank 18. The mounting arrangement 20 is intended to be permanently coupled to the shank 18 but may be removably connected to the same. The ground engaging tool 8 further comprises at least one tool member 22 which is also referred to as a first tool member. In the present embodiment, the ground engaging tool 8 may further comprise a second tool member 24. In the embodiment shown in the figures, the first tool member 22 is a cultivator point and the second tool member 24 is a cultivator wing share. The second tool member 24 may comprise a mounting portion 26 for coupling the second tool member 24 to the mounting arrangement 20 of the shank assembly 16.

The first tool member 22 and preferably also the second tool member 24 are removably coupled to the shank assembly 16 by means of a tensioning pin 28 and a locking pin 30. In the present embodiment, the tensioning pin 28 is at least partially received in the first tool member 22 and the locking pin 30 is at least partially received in the shank assembly 16, more precisely in the mounting arrangement 20 of the shank assembly 16. Alternative configurations within the scope of the accompanying claims are apparent to those skilled in the art.

In general, in a first rotational position of the locking pin 30, an enlarged shaft end portion 32 of the tensioning pin 28 is removably received in the locking pin 30, and, in a second rotational position of the locking pin 30, the enlarged shaft end portion 32 of the tensioning pin 30 is engaged by the locking pin 30. The tensioning pin 28 and, thus, the first tool member 22 are then locked in place thereby coupling the first tool member 22 to the shank assembly 16.

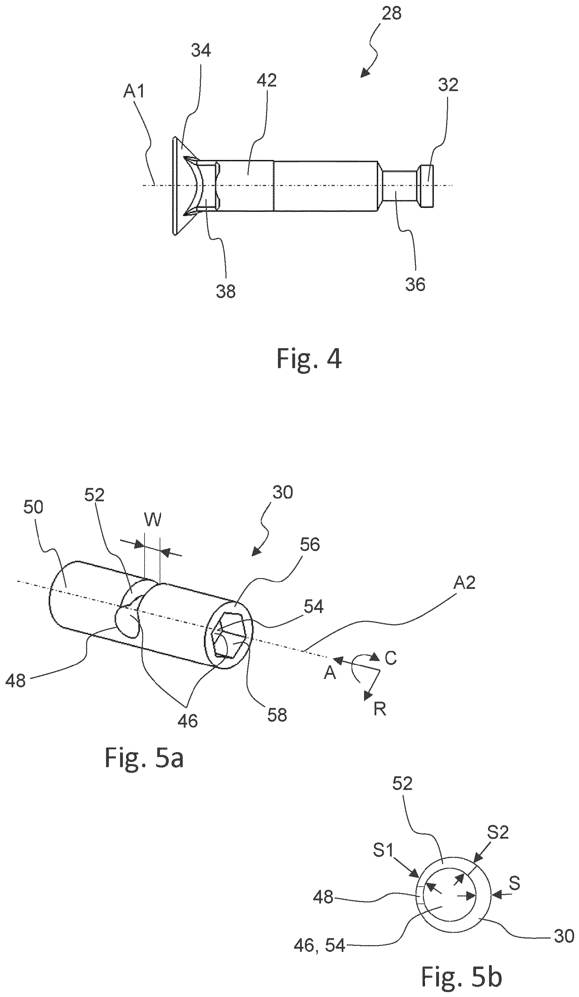

Preferred embodiments of the tensioning pin 28 and the locking pin 30 will now be described in greater detail under reference to figs. 4 and 5a, 5b. As shown in fig. 4, the tensioning pin 28 may have a longitudinal axis A1 and comprise a pin head 34, an engaging shaft portion 36, and the enlarged shaft end portion 32. The tensioning pin 28 may further comprise a securing shaft portion 38 having a rectangular or other cross section preventing the tensioning pin 38 against rotation within the first tool member 22. The securing shaft portion 38 may be located adjacent to the pin head 34. The first tool member 22 may have an opening 40 receiving the tensioning pin 38 and having a cross section corresponding to the cross section of the securing shaft portion 38 (cf. fig. 3). Moreover, the tensioning pin 28 may comprise a main shaft portion 42 preferably extending from the securing shaft portion 38 to the engaging shaft portion 36. The main shaft portion 42, the engaging shaft portion 36 and the enlarged shaft end portion 32 preferably have a cylindrical shape. To facilitate the process of assembling the ground engaging tool 8, the main shaft portion 42 may have a larger cross section than the engaging shaft portion 36 and the enlarged shaft end portion 32, and the enlarged shaft end portion 32 may have a larger cross section than the engaging shaft portion 36. The pin head 34 may have a diameter larger than the cross section of the main shaft portion 42 and the enlarged shaft end portion 32 in order to rest against the first tool member 22, preferably within a countersunk 44 formed in the first tool member 22.

Referring to fig. 5a, 5b, the locking pin 30 preferably comprises a cavity 46, a first recess 48 extending in a radial direction R between an outer circumferential surface 50 of the locking pin 30 and the cavity 46, and a slot 52 extending from the first recess 48 in a circumferential direction C of the locking pin 30. The first recess 48 has a diameter larger than the cross section of the enlarged shaft end portion 32 of the tensioning pin 28 to allow the enlarged shaft end portion 32 to pass through the first recess 48. The cavity 46 defines an inner lumen of the locking pin 30 larger than the enlarged shaft end portion 32 to completely receive the shaft end portion 32 within the cavity 46. The slot 52 has a width W larger than the cross section of the engaging shaft portion 36 of the tensioning pin 28 to receive the engaging shaft portion 36 within the slot 52. In addition, the width W of the slot 52 is smaller than the cross section of the enlarged shaft end portion 32 of the tensioning pin 28 to prevent the shaft end portion 32 from being removed from the cavity 46 of the locking pin 30 once the engaging shaft portion 36 is received within the slot 52.

The cavity 46 of the locking pin 30 may be formed by a second recess 54 extending from an end surface 56 of the locking pin 40 in an axial direction A of the locking pin 40. The locking pin 30 may further comprise a tool engagement portion 58 configured to engage with a common handheld or power tool to rotate the locking pin around its longitudinal axis A2. As shown in figs. 5a, 5b, the tool engagement portion 58 may be in the form of a hexagonal recess preferably provided at an entrance of the second recess 54.

As can be seen in fig. 5b, a wall thickness S of the locking pin 30 preferably increases from the first recess 48 in the circumferential direction C along the slot 52. That is, a first wall thickness S1 in a first section 60 of the locking pin 30 may be smaller than a second wall thickness S2 in a second section 62 of the locking pin 30, wherein the first section 60 may be defined at an intersection of the first recess 48 and the slot 52 and the second section 62 may be defined at an opposite end of the slot 52. Preferably, the wall thickness S continuously increases from the first wall thickness S1 to the second wall thickness S2. This can be achieved by providing the second recess 54 accordingly. For example, the second recess 54 can be formed by a bore extending parallel to but spaced apart from the longitudinal axis A2 of the locking pin 30.

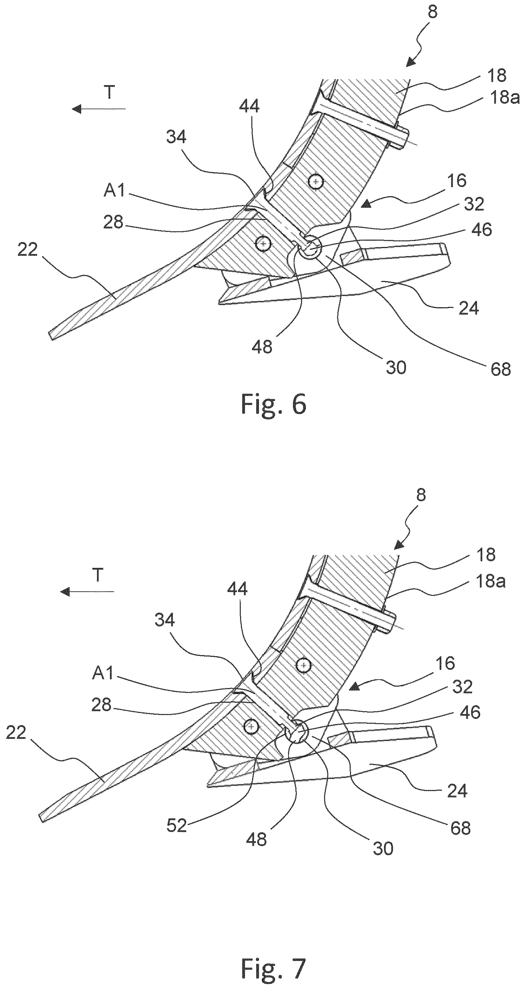

Referring to figs. 6 and 7, the function of the tensioning pin 28 and the locking pin 30 as well as a method for assembling the ground engaging tool 8 will now be described. As shown in fig. 6, the locking pin 30 is inserted into the shank assembly 16, preferably into the mounting arrangement 20 of the shank assembly 16, and placed in the first rotational position, in which the first recess 48 of the locking pin 30 will preferably be aligned with the tensioning pin 28, in particular with the longitudinal axis A1 of the tensioning pin 28. With the locking pin 30 in the first rotational position and after arranging the first tool member 22 on the shank assembly 16, the tensioning pin 28 can be inserted into the first tool member 22 such that the tensioning pin 28 extends through the first tool member 22 and into the locking pin 30. The enlarged shaft end portion 32 of the tensioning pin 28 is now arranged within the cavity 46 of the locking pin 30. Next, the locking pin 30 can be rotated from the first rotational position into the second rotational position shown in fig. 7, e.g., by a handheld tool inserted into the tool engagement portion 58 of the locking pin 30 by a user.

In the second rotational position of the locking pin 30 shown in fig. 7, the engaging shaft portion 36 of the tensioning pin 28 is received within the slot 52 of the locking pin 30 and the enlarged shaft end portion 32 is locked within the cavity 46. More precisely, since the cross-section of the enlarged shaft end portion 32 is larger than the width of the slot 52, the enlarged shaft end portion 32 and, thus, the entire tensioning pin 28 cannot be removed. In this way, the first tool member 22 is secured on the shank assembly 16 but can easily be removed and replaced by rotating the locking pin 30 back into the first rotational position.

In case the locking pin 30 has a varying wall thickness S as described above, the enlarged shaft end portion 32 is increasingly forced towards the locking pin 30 while rotating the locking pin 30 from the first rotational position into the second rotational position to establish a connection free of play.

As noted above, in a particularly preferred embodiment, the locking pin 30 is received in the mounting arrangement 20 of the shank assembly 16. The mounting arrangement 20 may not only serve to receive the locking pin 20 but may also facilitate coupling of the second tool member 24 to the shank assembly 16 as will now be described by referring to figs. 2 and 3 again.

In general, the locking pin 30 is rotatably received in the shank assembly 16 which may therefore comprise at least one first receptacle 64 preferably having a substantially circular cross section rotatably supporting the locking pin 30. In the preferred embodiment shown in the figures, the mounting arrangement 20 comprises the at least one first receptacle 64. More particularly, the mounting arrangement 20 may comprise a first mounting plate 66 and a second mounting plate 68 laterally attached to the shank 18. Each of the first and second mounting plates 66, 68 may have a first receptacle 64 which are aligned with each other to receive the locking pin 30 therein. The first and the second mounting plates 66, 68 preferably extend beyond a rear surface 18a of the shank 18 in a direction opposite to the direction of travel T, as can also be seen in figs. 6 and 7. The first receptacles 64 may be arranged in a section of the first and second mounting plates 66, 68, respectively, not contacting the shank 18. The locking pin 30 may therefore only be supported by the first and second mounting plates 66, 68 but not extend through the shank 18 itself.

Furthermore, the second tool member 24 may be coupled to the mounting arrangement 20. For this reason, each of the first mounting plate 66 and the second mounting plate 68 may comprise at least one protrusion, preferably a first protrusion 70 and a second protrusion 72 which may have a substantially cylindrical shape and extend from the first and second mounting plates 66, 68, respectively, in the lateral direction. The mounting portion 26 of the second tool member 24 may comprise corresponding hook portions 78, 80, 82, 84 to engage the first and second protrusions 70, 72.

In the present embodiment, the mounting portion 26 of the second tool member 24 comprises a first section 74 which is to be arranged adjacent to the first mounting plate 66 and a second section 76 which is to be arranged adjacent to the second mounting plate 68. For example, the first section 74 and the second section 76 are flange like members fixedly attached to a top surface of the cultivator wing share 24. The shank assembly 16 is partially received between the first and second sections 74, 76 of the mounting portion 26. The first section 74 may comprise a first hook section 78 engaging with the first protrusion 70, and a second hook section 80 engaging with the second protrusion 72. The second section 76 may comprise a third and a fourth hook section 82, 84 engaging with the protrusions of the second mounting plate 68. In this way, the second tool member 24 can be hooked to the shank assembly 16 and is held in place without any assistance of the user.

The mounting portion 26 of the second tool member 24 may further comprise at least one a second receptacle 86 receiving and the locking pin 30. More particularly, the first section 74 may comprise a second receptacle 86a and the second section 76 may comprise another second receptacle 86b which are aligned with each other and, in a mounted condition of the second tool member 24, aligned with the at least one first receptacle is 64. Hence, the locking pin 30 does not only couple the first tool member 22 but also the second tool member 24 to the shank assembly 16 in an easy, quick and reliable manner.

These and other advantages of the present invention will be apparent to those skilled in the art from the foregoing specification. Accordingly, it is to be recognized by those skilled in the art that changes or modifications may be made to the above-described embodiments without departing from the broad inventive concepts of the invention. It is to be understood that this invention is not limited to the particular embodiments described herein but is intended to include all changes and modifications that are within the scope of the invention as defined by the accompanying claims.

## Claims

1. A ground engaging tool (8) for a working machine (4), in particular for an agricultural tillage implement (4), the ground engaging tool (8) comprising:
a shank assembly (16) configured to mount the ground engaging tool (8) to a frame (6) of the working machine (4);
a tool member (22, 24) removably coupled to the shank assembly (16) by means of a tensioning pin (28) and a locking pin (30);
wherein the tensioning pin (28) is at least partially received in a first component of the shank assembly (16) and the tool member (22, 24), and the locking pin (30) is at least partially received in a second component of the shank assembly (16) and the tool member (22, 24) different from the first component;
wherein, in a first rotational position of the locking pin (30), an enlarged shaft end portion (32) of the tensioning pin (28) is removably received in the locking pin (30), and, in a second rotational position of the locking pin (30), the enlarged shaft end portion (32) of the tensioning pin (28) is engaged by the locking pin (30) thereby locking the tensioning pin (28) in place and coupling the tool member (22, 24) to the shank assembly (16).

2. The ground engaging tool (8) according to claim 1, **characterized in that** the locking pin (30) is rotatably received in the second component, wherein a longitudinal axis (A1) of the tensioning pin (28) extends perpendicular to a longitudinal axis (A2) of the locking pin (30).

3. The ground engaging tool (8) according to claim 1 or 2, **characterized in that** the tensioning pin (28) comprises a pin head (34), an engaging shaft portion (36) and the enlarged shaft end portion (32) having a larger cross section than the engaging shaft portion (36); and **in that**
the locking pin (30) has a cavity (46), a first recess (48) extending in a radial direction (R) of the locking pin (30) between an outer circumferential surface (50) of the locking pin (30) and the cavity (46), and a slot (52) extending from the first recess (48) in a circumferential direction (C) of the locking pin (30),
wherein, in the first rotational position of the locking pin (30), the first recess (48) is aligned with the tensioning pin (28) thereby allowing the enlarged shaft end portion (32) of the tensioning pin (28) to be inserted into or removed from the cavity (46) through the first recess (48), and wherein, in the second rotational position of the locking pin (30), the engaging shaft portion (36) of the tensioning pin (28) is received in the slot (52) of the locking pin (30) and the enlarged shaft end portion (32) of the tensioning pin (28) is received within the cavity (46) of the locking pin (30).

4. The ground engaging tool (8) according to claim 3, **characterized in that** the cavity (46) and the first recess (48) of the locking pin (30) are sized to receive the enlarged shaft end portion (32) of the tensioning pin (28), and **in that**
the slot (52) of the locking pin (30) has a width (W) smaller than the cross section of enlarged shaft end portion (32) and larger than the cross section of the engaging shaft portion (36).

5. The ground engaging tool (8) according to claim 3 or 4, **characterized in that** the pin head (34) of the tensioning pin (28) rests against the first component.

6. The ground engaging tool (8) according to any of claims 3 to 5, **characterized in that** a wall thickness (S) of the locking pin (30) is defined in the radial direction (R) of the locking pin (30) from the outer circumferential surface (50) to an inner circumferential surface of the locking pin (30) defined by the cavity (46), wherein the wall thickness (S) increases from the first recess (48) along the slot (52).

7. The ground engaging tool (8) according to claim 6, **characterized in that** the locking pin (30) comprises a first wall thickness (S1) in a first section of the locking pin (30), in which the engaging shaft portion (36) of the tensioning pin (28) is positioned when the locking pin (30) is in the first rotational position, and the locking pin (30) comprises a second wall thickness (S2) in a second section of the locking pin (30), in which the engaging shaft portion (36) of the tensioning pin (28) is positioned when the locking pin (30) is in the second rotational position, wherein the first wall thickness (S1) is smaller than the second wall thickness (S2).

8. The ground engaging tool (8) according to any of the preceding claims, **characterized in that** the locking pin (30) comprises a tool engagement portion (58) configured to engage with a common handheld or power tool for rotating the locking pin (30) between the first and second rotational positions.

9. The ground engaging tool (8) according to any of the preceding claims, **characterized in that** the tool member (22, 24) comprises a cultivator point (22) or a cultivator wing share (24).

10. The ground engaging tool (8) according to any of claims 1 to 8, **characterized in that** the first component is the tool member (22) comprising a cultivator point (22) receiving the tensioning pin (28); and
the second component is the shank assembly (16) comprising a shank (18) and a mounting arrangement (20) attached to the shank (18), the mounting arrangement (20) comprising at least one first receptacle (64) receiving the locking pin (30).

11. The ground engaging tool (8) according to claim 10, **characterized in that** the mounting arrangement (20) comprises a first mounting plate (66) and a second mounting plate (68) laterally attached to the shank (18), wherein each of the first and second mounting plates (66, 68) comprises a first receptacle (64) receiving the locking pin (30).

12. The ground engaging tool (8) according to claim 10 or 11, **characterized in that** the ground engaging tool (8) further comprises a second tool member (24) formed by a cultivator wing share (24) having a mounting portion (26) for mounting the cultivator wing share (24) to the shank assembly (16), the mounting portion (26) comprising at least one second receptacle (86) aligned with the at least one first receptacle (64) for receiving the locking pin (30).

13. The ground engaging tool (8) according to claims 11 and 12, **characterized in that** each of the first and second mounting plates (66, 68) comprises at least one protrusion (70, 72, 74, 76) and the mounting portion (26) of the cultivator wing share (24) comprises at least two hook portions (78, 80, 82, 84) engaging with the at least one protrusion (70, 72, 74, 76) of the first and second mounting plates (66, 68) to hold the cultivator wing share (24) in place.

14. An agricultural tillage implement (4), in particular in the form of a field cultivator (4), comprising a frame (6) and a plurality of ground engaging tools (8) according to any of the claims 1 to 13 mounted to the frame (6).

15. A method for assembling a ground engaging tool (8) by mounting a tool member (22, 24) to a shank assembly (16) comprising the steps of:
arranging the tool member (22, 24) in position on the shank assembly (16);
inserting a locking pin (30) into the shank assembly (16);
inserting a tensioning pin (28) into the tool member (22, 24) such that the tensioning pin (28) extends through the tool member (22, 24) and into the locking pin (30), wherein an enlarged shaft end portion (32) of the tensioning pin (28) is received in a cavity (46) of the locking pin (30);
rotating the locking pin (30), thereby engaging the tensioning pin (28) and locking the tensioning pin (28) in place.
